# EUROPEAN PATENT APPLICATION

(11) **EP 4 640 340 A1**
(43) Date of publication of application: **29.10.2025**
(21) Application number: 23906997.4
(22) Date of filing: 18.12.2023
(51) Int. Cl.: B22F 1/16, B22F 1/00, B22F 1/054, B22F 1/14, C01B 32/18, H01M 4/90

(54) **COMPOSITE STRUCTURE CONTAINING GRAPHENE, AND METHOD FOR PRODUCING SAME**

(30) Priority: 23.12.2022 JP 2022206531
(71) Applicant: Sojitz Institute of Innovative Technologies, Ltd., Tokyo 100-0011 (JP); National Institute of Technology, Hachioji-shi, Tokyo 193-0834 (JP)
(72) Inventor: MIYAKOSHI, Akihiko, Asahikawa City, Hokkaido 0718142 (JP); KODERA, Fumihiro, Asahikawa City, Hokkaido 0718142 (JP); AJIKI, Yoshiharu, Tokyo 100-0011 (JP)
(74) Representative: Betten & Resch
(86) International application number: PCT/JP2023/045371
(87) International publication number: WO 2024/135637

(57) **Abstract**

The above-described problem is solved by a graphene-containing composite structure comprising a graphene multilayer film doped with impurities on a surface of Ni nanoparticles that dissolve carbon. Such a composite structure is manufactured by layering, in close proximity to each other, a mixture obtained by mixing a nano-metal powder composed of Ni, a metal carbide heated by microwaves, and a zeolite-based catalyst, and a susceptor that includes an impurity source providing the impurities and is heated by microwaves, and circulating a reaction gas containing hydrocarbons while performing irradiation with microwaves.

## Description

### FIELD OF THE INVENTION

The present invention relates to a graphene-containing composite structure having high catalytic activity, and a manufacturing method of the same.

### BACKGROUND ART

In electrochemical cells such as water electrolysis devices, fuel cells, and air secondary batteries, catalysts are used on electrodes, and platinum is commonly used. On the other hand, from the perspective of metal resource depletion, alternative catalysts are desired, and catalysts using graphene have been proposed.

For example, Patent Document 1 discloses a catalyst of electrodes for water electrolysis that uses nickel-carbon nano-onions (Ni-CNO) in which a multilayer film of graphene is provided to a surface of particulate nickel. Such a catalyst, as a mixed solution with an ionomer, is applied to one side of a carbon cloth constituting a gas diffusion layer and forms an electrode for water electrolysis, thereby achieving high energy conversion efficiency and allowing the electrode to be manufactured inexpensively.

Further, Patent Document 2 discloses a method of manufacturing a composite structure composed of Ni-CNO such as described above by utilizing microwave irradiation. The method includes irradiating, with microwaves in multiple modes, a composition that contains silicon carbide, nickel, and zeolite, each in particle form, and acts as a catalyst, thereby achieving activation, and then bringing the composition into contact with a hydrocarbon gas such as methane. This causes a reaction in which carbon compounds contained in this hydrocarbon gas serve as a substrate, thus the graphene is carried on a nickel surface in the composition. Here, as one mechanism of a graphene generating process, the silicon carbide absorbs the microwaves and self-heats to thermally activate the nickel, which promotes thermal decomposition of the carbon compounds. At the same time, a template structure of zeolite having a pore diameter about the size of an aromatic ring guides synthesis of the carbon structure that forms the graphene framework. A carbon growth action of the nickel then promotes the growth of the six-membered carbon ring structure of the graphene.

Here, Non-Patent Document 1 states that defects widely present in nano-materials become local regions that provide catalytic activity, and that the addition (doping) of heteroatoms (impurities) as zero-dimensional point defects become such defects that provide catalytic activity, and then describes experimental results regarding the catalytic activity of boron-doped carbon nano-onions (CNOs). Such CNOs can be obtained by heat-treating ultra-dispersed nano-diamond particles and amorphous boron.

### PRIOR ART DOCUMENTSPatent Documents

Patent Document 1: Japanese Laid-Open Patent Application Publication No. 2021-46585Patent Document 2: Japanese Laid-Open Patent Application Publication No. 2016-64369

### Non-Patent Documents

Non-Patent Document 1: Grzegorz S. Szymanski, Yuka Suzuki, Tomonori Ohba, Bogdan Sulikowski, Kinga Gora-Marek, Karolina A. Tarach, Stanislaw Koter, Piotr Kowalczyk, Anna Ilnicka, Monika Zieba, Luis Echegoyen, Artur P. Terzyk, and Marta E. Plonska-Brzezinska; ACS Appl. Mater. Interfaces 2021, 13, 51628-51642

### SUMMARY OF THE INVENTION

### Problems to be Solved by the Invention

By introducing defects into graphene, it is possible to provide catalytic activity. In Ni-CNO such as described above, defects occur by providing curvature on Ni nanoparticles and forming graphene into a multilayered structure, thereby achieving catalytic activity. However, this catalytic activity is unstable and insufficient. Here, it is possible to consider that doping impurities into graphene can further enhance catalytic activity.

The present invention has been made in view of circumstances such as described above, and an object thereof is to provide a doped graphene-containing composite structure having high catalytic activity, and a manufacturing method of the same.

### Means for Solving the Problems

A graphene-containing composite structure according to the present invention comprises a graphene multilayer film doped with impurities on a surface of Ni nanoparticles that dissolve carbon.

According to such features, high catalytic activity can be achieved in Ni-CNO.

In the invention described above, the impurities may be silicon or boron. Further, the graphene multilayer film may have a gradient that lowers a concentration of the impurities from an interior toward a surface. According to such features, stable, high catalytic activity can be achieved in the Ni-CNO.

The graphene multilayer film may include an etched surface from etching. Further, a G/D ratio of a Raman spectrum of the graphene multilayer film may be greater than 1.30. According to such features, a new surface is provided to the graphene multilayer film of the Ni-CNO, making it possible to achieve stable, high catalytic activity.

Further, a manufacturing method according to the present invention is a manufacturing method of a composite structure provided with a graphene multilayer film doped with impurities on a surface of Ni nanoparticles that dissolve carbon. The manufacturing method comprises placing, in close proximity to each other, a mixture obtained by mixing a nano-metal powder composed of Ni, a metal carbide heated by microwaves, and a zeolite-based catalyst, and a susceptor that includes an impurity source providing the impurities and is heated by microwaves, and circulating a reaction gas containing hydrocarbons and carbon dioxide while performing irradiation with microwaves.

According to such features, a catalyst composed of Ni-CNO having high catalytic activity can be stably obtained.

In the invention described above, the susceptor may be composed of silicon carbide. Furthermore, the reaction gas may contain hydrogen sulfide. Alternatively, the susceptor may be composed of boron oxide. According to such features, a catalyst composed of Ni-CNO having high catalytic activity can be more stably obtained.

In the invention described above, the manufacturing method may further comprise an etching process of etching, after stopping circulation of the reaction gas, a surface of the graphene multilayer film on the surface of the Ni nanoparticles. Furthermore, the etching process may include a chemical vapor-phase etching by carbon dioxide. According to such features, a catalyst composed of Ni-CNO having higher catalytic activity can be stably obtained.

In the invention described above, the hydrocarbon may be methane. According to such a feature, a catalyst composed of Ni-CNO having high catalytic activity can be more stably obtained.

In the invention described above, the metal carbide and the zeolite-based catalyst may be molybdenum carbide and NZSM-5, respectively. According to such features, a catalyst composed of Ni-CNO having high catalytic activity can be more stably obtained.

### BRIEF DESCRIPTION OF THE DRAWINGS

Fig. 1 is a TEM image of Ni-CNO.
Fig. 2 is a sectional view illustrating a configuration inside a reaction tube.
Fig. 3 is a graph showing a relationship between a distance from an Ni nanoparticle surface of a graphene multilayer film and a concentration of Si, as measured by a STEM-EDX method.
Fig. 4 shows photoelectron spectra obtained by X-ray photoelectron spectroscopy.
Figs. 5 (a) to 5 (c) are TEM images of the graphene multilayer film after CO₂ etching.
Figs. 6 (a) to 6 (c) are Raman spectra of the graphene multilayer film after CO₂ etching.

### Embodiments of the Invention[0021]

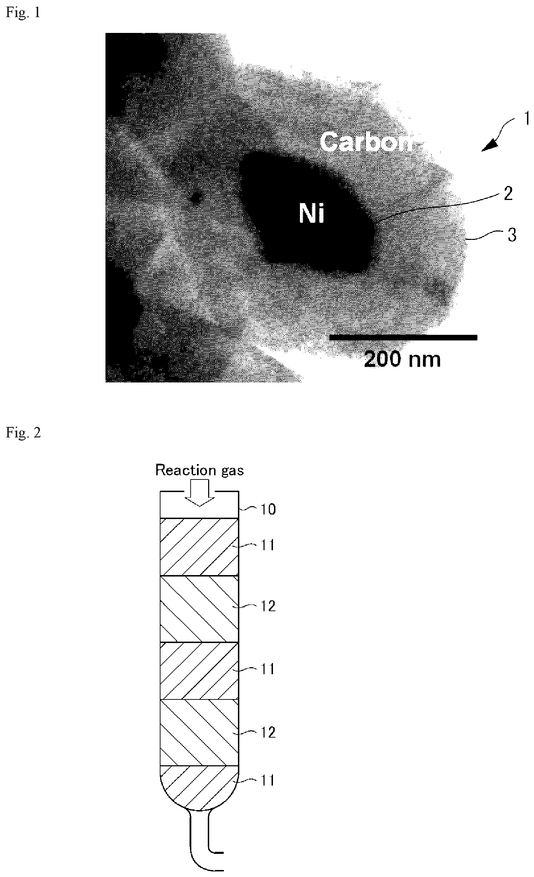

A composite structure of one embodiment according to the present invention will now be described with reference to Fig. 1 to Figs. 6 (a) to 6 (c).

As shown in Fig. 1, a composite structure 1 according to this embodiment includes a graphene multilayer film 3 doped with impurities on a surface of Ni nanoparticles 2 that dissolve carbon. That is, the composite structure 1 has a nickel-carbon nano-onion (Ni-CNO) structure in which the graphene multilayer film 3 doped with impurities is provided as a shell around the Ni nanoparticles 2 serving as a central core. As the impurities, for example, silicon or boron can be suitably used.

The composite structure 1 is obtained by generating defects in the graphene structure by providing curvature to the graphene multilayer film 3, and obtained by further increasing or producing defects in the graphene structure by impurity doping. The composite structure 1 can stably achieve high catalytic activity due to its structure having numerous stable defects.

As illustrated in Fig. 2, as a manufacturing method of such a composite structure 1, a reaction tube 10 may be used. In an interior of the reaction tube 10, a catalyst layer 11 and a susceptor layer 12 are alternately layered so as to be adjacent to each other. The catalyst layer 11 includes a mixture obtained by mixing a nano-metal powder composed of Ni, a metal carbide heated by microwaves, and a zeolite-based catalyst. Further, the susceptor layer 12 includes an impurity source that provides impurities and a susceptor heated by microwaves.

The reaction tube 10 is installed in, for example, an interior of a microwave reactor of a single-mode or multi-mode type having a frequency of 0.3 to 3.0 GHz, typically 2.45 GHz, to allow the susceptor layer 12 and the like in the interior thereof to be heated by microwaves. Further, in the reaction tube 10, reaction gas can be introduced from an upper portion, circulated in the interior, and discharged from a lower portion. Hydrocarbons are contained in the reaction gas. Methane can be suitably used as the hydrocarbon. To circulate the reaction gas, the catalyst layer 11 and the susceptor layer 12 are each a shape that facilitates circulation of the reaction gas. For example, by spreading each material in a gravel state, it is relatively easy to obtain a layer through which the reaction gas can circulate. It should be noted that the reaction gas partially convects and diffuses in the interior of the reaction tube 10, making circulation from top toward bottom not necessarily required, and another circulation direction, such as introduction from the side, for example, may be adopted.

When the reaction gas is introduced while the reaction tube 10 is irradiated with microwaves to heat the susceptor layer 12, the impurity source is heated and decomposed, releasing impurity atoms and decomposing the hydrocarbons in the reaction gas by the catalyst layer 11. Then, a multilayer film of graphene is formed on a surface of the nano-metal powder while the decomposed C incorporates impurity atoms. That is, under a thermal environment, the carbon derived from the hydrocarbons that could not be dissolved into the Ni nanoparticles 2 serving as a core, is formed into a layered state together with the impurities serving as the dopant. This makes it possible to obtain the composite structure 1 in which the graphene multilayer film 3 is doped with impurities.

It should be noted that the susceptor layer 12 serving as the heat source by the irradiation with microwaves may be disposed, mixed, or the like in an interior of the catalyst layer 11, so that the two are adjacent to each other, as appropriate.

For example, an example in which silicon (Si) is doped as the impurity to obtain the composite structure 1 will now be described in detail.

In the catalyst layer 11, Ni powder having a particle size of 150 nm or less (for example, 20 to 150 nm) was used as the nano-metal powder, and molybdenum carbide, which is a carbide of molybdenum, was used as the metal carbide. Here, the particle size of the nano-metal powder can be determined by the following method. That is, the particles of the nano-metal powder to be measured were observed by a scanning transmission electron microscope, short and long diameters of a single particle were measured, and an average value thereof was taken as the particle size of the individual particle. The particle sizes of 100 particles were similarly measured, and the average value thereof was taken as the particle size of the nano-metal powder.

Further, H-type ZSM-5 (silicon dioxide/alumina weight ratio: 23) was used as the zeolite-based catalyst. In the susceptor layer 12, silicon carbide (β-SiC) was used as the susceptor. Silicon carbide contains silicon, which is an impurity element serving as a dopant, and thus also serves as an impurity source supplying silicon. A quartz tube was used as the reaction tube 10. With such configurations, the reaction tube 10, in which the catalyst layer 11 and the susceptor layer 12 were layered in close proximity to each other in the interior thereof, was installed in a microwave reactor. As the microwave reactor, a multi-mode microwave generator (µ-Reactor-Ex, manufactured by Shikoku Instrumentation Co., Ltd.; magnetron oscillation frequency: 2.45 GHz, maximum output power: 1 kW) was used.

The reaction tube 10 was irradiated with microwaves in the microwave reactor while introducing methane as a reaction gas from the upper portion of the reaction tube 10. This makes it possible to obtain the composite structure 1 (hereinafter referred to as Ni-CNO) including a silicon-doped graphene multilayer film.

It should be noted that the obtained Ni-CNO is in a state of being mixed with catalyst components composed of the metal carbide and the zeolite-based catalyst used in the catalyst layer 11, and can be separated from these. These can be separated by, for example, cleaning and pickling using a liquid-liquid interface. Specifically, a process of dispersing the Ni-CNO with catalyst components in a mixed solution in which a liquid-liquid interface is formed by distilled water and toluene, and removing the distilled water, is repeated several times. Then, the Ni-CNO incorporated into an oil phase by the toluene is filtered, washed with distilled water and ethanol, and dried. Furthermore, the Ni-CNO is added to a 30% hydrogen peroxide solution heated in a water bath and stirred for 30 minutes. Subsequently, the Ni-CNO can be separated from the catalyst components by filtration and washing with distilled water and ethanol.

On the other hand, in a case in which the composite structure 1 doped with boron (B) as an impurity is obtained, solid boron oxide (B₂O₅) is used in the susceptor layer 12, and boron serving as the impurity is supplied from this boron oxide. Methane is used as the reaction gas, but mixing with carbon dioxide is preferred. Carbon dioxide etches boron oxide, thereby promoting the decomposition of boron oxide and the doping of boron. Additionally, in the same manner as described above, the composite structure 1 doped with boron can also be obtained. It should be noted that, similarly, boron carbide and boron nitride can also be used as the susceptor for supplying boron as an impurity. Further, in a case in which the reaction gas contains both a hydrocarbon (preferably methane) and carbon dioxide, a content of carbon dioxide relative to a total volume of the hydrocarbon and hydrogen sulfide is preferably 20 to 80 vol%, more preferably 40 to 60 vol%.

The following describes the results of a more detailed investigation of the Ni-CNO obtained by using silicon as a dopant.

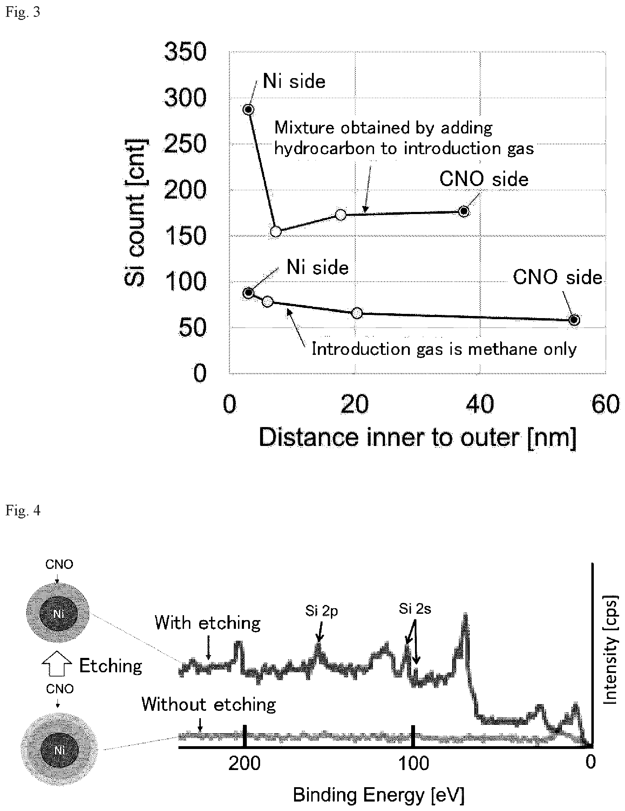

Here, as shown in Fig. 3, a concentration of the impurities in a case in which methane and hydrogen sulfide were mixed at a volume ratio of 50% each as the reaction gas was investigated. In the Ni-CNO, an amount of silicon within a range from the surface (Ni side) of the Ni nanoparticles 2 to a surface (CNO side) of the graphene multilayer film 3 (CNO) was measured using energy dispersive X-ray spectroscopy in a scanning transmission electron microscope (STEM-EDX method). According to this graph, in a case in which hydrogen sulfide was contained in the reaction gas (introduction gas), an amount of doped silicon increased about threefold as compared with a case in which hydrogen sulfide was not contained. This is because the supply of silicon serving as a dopant increased due to the etching of silicon carbide with the hydrogen sulfide. This promotes the doping of silicon into the Ni-CNO, resulting in an increase in the doped amount of silicon. That is, containing hydrogen sulfide as the reaction gas is also preferred. It should be noted that, in a case in which the reaction gas contains both a hydrocarbon (preferably methane) and hydrogen sulfide, a content of hydrogen sulfide relative to the total volume of the hydrocarbon and hydrogen sulfide is preferably 20 to 80 vol%, more preferably 40 to 60 vol%.

It should be noted that, as shown in the graph, a concentration of the silicon tended to decrease from the surface of the Ni nanoparticles 2 toward the surface of the graphene multilayer film 3. In this way, the graphene multilayer film 3 may have a gradient in which the concentration of the impurities decreases from the interior toward the surface.

Further, the graphene multilayer film 3 preferably includes an etched surface from etching. That is, an etching process is further added to the above-described manufacturing method, making it possible to obtain the Ni-CNO including an etched surface. Specifically, the Ni-CNO doped with silicon is immersed in a hypochlorous acid aqueous solution at room temperature for about several dozen hours. Energy analysis by X-ray photoelectron spectroscopy was performed on the etched Ni-CNO and the non-etched Ni-CNO thus formed, and photoelectron spectra were obtained.

As shown in Fig. 4, according to the obtained photoelectron spectra, distinct peaks were substantially not observed in the case without etching, whereas a distinct peak corresponding to the impurity Si was observed in the case with etching. Conceivably, a new surface of the CNO was produced by the etching, and property changes appeared on this surface. That is, a surface of the CNO formed by regular growth through carbon deposition and an etched surface formed by erosion starting from chemically selected parts may have different properties. As a result, the silicon concentration on the surface can be increased by etching, facilitating the achievement of stable, higher catalytic activity. Further, as described above, the concentration of silicon tends to be higher toward the interior of the CNO, making it preferable to increase the concentration of the silicon on the new surface by etching in a way that moves the surface toward the interior of the CNO. Additionally, the curvature of the graphene increases and the number of defects per unit area increases as the concentration of the silicon is closer to the surface of the Ni nanoparticles. From this point as well, it is considered that catalytic activity can be enhanced through etching.

It should be noted that the etching process can use dry etching in addition to known wet etching using hot mixed acids and the like. For example, the etching process may be chemical vapor-phase etching by carbon dioxide. In the manufacturing method of Ni-CNO described above, after the formation of the Ni-CNO, the circulation of the reaction gas is stopped, and then carbon dioxide is circulated into the reaction tube 10 and irradiation is performed with microwaves. This causes the CNO to be etched from the surface by a Boudouard reaction.

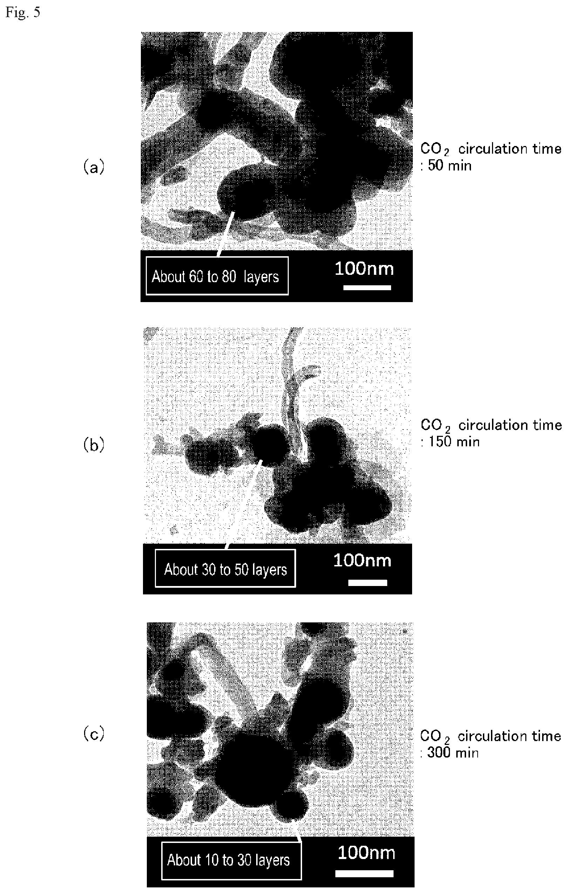

As shown in Figs. 5 (a) to 5 (c), etching conditions were compared based on the circulation time of carbon dioxide. Here, a mass of the catalyst layer 11 was about 20 g, and carbon dioxide was circulated at 50 mL/min. As shown in Fig. 5 (a), when the circulation time was 50 minutes, 60 to 80 layers of graphene in the CNO remained with a layer thickness of about 50 to 100 nm, resulting in a spherical shape having a particle size of approximately 100 to 200 nm, depending on a particle size of the Ni nanoparticles. Further, as shown in Fig. 5 (b), when the circulation time was 150 minutes, 30 to 50 layers of graphene in the CNO remained with a layer thickness of several tens of nm, resulting in a spherical shape having a particle size of approximately 50 to 100 nm. Furthermore, as shown in Fig. 5 (c), when the circulation time was 300 minutes, 10 to 30 layers of graphene in the CNO remained with a thin layer thickness of about 10 nm as compared with the diameter of the Ni nanoparticles, resulting in a spherical shape having a particle size of approximately 20 to 100 nm. This indicates that etching progresses by heating and circulation of carbon dioxide. It should be noted that the particle size of the Ni-CNO can be measured by the same method as for that of the nano-metal powder.

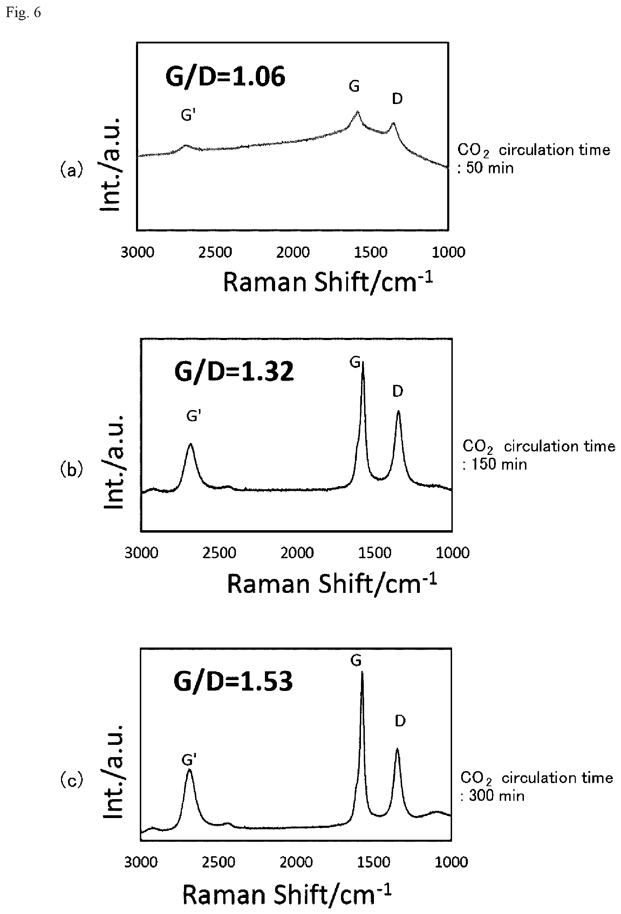

As shown in Figs. 6 (a) to 6 (c), Raman spectra of the CNO were measured at the three circulation times described above, and a peak intensity ratio (G/D ratio) between a D-band, which is a vibration mode near 1,350 cm⁻¹, and a G-band, which is a vibration mode similar to the Raman active mode of graphite, was calculated to evaluate a defect amount introduced. The G/D ratio increases as the carbon dioxide circulation time is increased. This result shows that the etched surface by dry etching can also change the surface properties of the CNO. To achieve stable, high catalytic activity, it is desirable to make the G/D ratio in the Raman spectrum of the CNO greater than 1.10, preferably greater than 1.30, and more preferably greater than 1.50, through etching. Further, an upper limit of the G/D ratio is not particularly limited, but is, for example, 2.50 or less.

Embodiments according to the present invention and modifications based thereon have been described above, but the present invention is not necessarily limited to these examples. Further, those skilled in the art will be able to find various alternative embodiments and variations without departing from the spirit of the present invention or the appended claims.

### Descriptions of Reference Numerals

- 1: Composite structure
- 2: Ni nanoparticles
- 3: Graphene multilayer film
- 10: Reaction tube
- 11: Catalyst layer
- 12: Susceptor layer

## Claims

1. A graphene-containing composite structure comprising:
a graphene multilayer film doped with impurities on a surface of Ni nanoparticles that dissolve carbon.

2. The graphene-containing composite structure according to claim 1, wherein
the impurities are silicon or boron.

3. The graphene-containing composite structure according to claim 2, wherein
the graphene multilayer film has a gradient that lowers a concentration of the impurities from an interior toward a surface.

4. The graphene-containing composite structure according to any one of claims 1 to 3, wherein
the graphene multilayer film includes an etched surface from etching.

5. The graphene-containing composite structure according to claim 4, wherein
a G/D ratio of a Raman spectrum of the graphene multilayer film is greater than 1.30.

6. A manufacturing method of a graphene-containing composite structure that is a composite structure provided with a graphene multilayer film doped with impurities on a surface of Ni nanoparticles that dissolve carbon, the manufacturing method comprising:
placing, in close proximity to each other, a mixture obtained by mixing a nano-metal powder composed of Ni, a metal carbide heated by microwaves, and a zeolite-based catalyst, and a susceptor that includes an impurity source providing the impurities and is heated by microwaves; and
circulating a reaction gas containing hydrocarbons while performing irradiation with microwaves.

7. The manufacturing method of a graphene-containing composite structure according to claim 6,
wherein
the susceptor is composed of silicon carbide.

8. The manufacturing method of a graphene-containing composite structure according to claim 7,
wherein
the reaction gas contains hydrogen sulfide.

9. The manufacturing method of a graphene-containing composite structure according to claim 6,
wherein
the susceptor is composed of boron oxide.

10. The manufacturing method of a graphene-containing composite structure according to claim 6, further comprising:
an etching process of etching, after stopping circulation of the reaction gas, a surface of the graphene multilayer film on the surface of the Ni nanoparticles.

11. The manufacturing method of a graphene-containing composite structure according to claim 10,
wherein
the etching process includes a chemical vapor-phase etching by carbon dioxide.

12. The manufacturing method of a graphene-containing composite structure according to any one of claims 6 to 11, wherein
the hydrocarbon is methane.

13. The manufacturing method of a graphene-containing composite structure according to any one of claims 6 to 11, wherein
the metal carbide and the zeolite-based catalyst are molybdenum carbide and NZSM-5, respectively.
